## Europäisches Patentamt
## European Patent Office
## Office européen des brevets

(19)

(11) Veröffentlichungsnummer: **0 121 720**
**B1**

(12) **EUROPÄISCHE PATENTSCHRIFT**

(45) Veröffentlichungstag der Patentschrift:
11.06.86

(51) Int. Cl.⁴: **H 01 R 13/22,** H 05 K 5/02,
**H 01 R 3/00**

(21) Anmeldenummer: 84102034.0

(22) Anmeldetag: 27.02.84

(54) Kontaktanordnung zur Herstellung eines elektrischen Kontaktes zwischen aneinandergrenzenden Gehäuseteilen.

(30) Priorität: 12.04.83 DE 8310731 U

(43) Veröffentlichungstag der Anmeldung:
17.10.84 Patentblatt 84/42

(45) Bekanntmachung des Hinweises auf die Patenterteilung:
11.06.86 Patentblatt 86/24

(84) Benannte Vertragsstaaten:
DE FR GB NL

(56) Entgegenhaltungen:
DE - A - 2 503 091
FR - A - 2 472 854
FR - A - 2 490 413
US - A - 3 591 795

(73) Patentinhaber: Nixdorf Computer Aktiengesellschaft,
Fürstenallee 7, D-4790 Paderborn (DE)

(72) Erfinder: Knoop, Franz-Josef, Sonnenhang 7,
D-4793 Büren-Steinhausen (DE)
Erfinder: Scharnetzke, Rainer, Mühlenflössstrasse 29 a,
D-4792 Bad Lippspringe (DE)

(74) Vertreter: Patentanwälte Schaumburg & Thoenes,
Mauerkircherstrasse 31 Postfach 86 07 48,
D-8000 München 86 (DE)

LIBER, STOCKHOLM 1986

## Beschreibung

Die Erfindung betrifft eine Kontaktanordnung zur Herstellung eines elektrischen Kontaktes zwischen zwei aneinander angrenzenden Gehäuseteilen von elektrischen oder elektronischen Geräten, wobei an jedem der Gehäuseteile eine von zwei zur elektrischen Kontaktgabe miteinander zusammenwirkenden Kontaktflächen vorgesehen ist.

Bei den üblichen Fertigungsmethoden zur Herstellung von Gehäuseteilen elektrischer und elektronischer Geräte sind bei einem wirtschaftlich vertretbaren Aufwand die Toleranzen so groß, daß die Gehäuseteile bei ihrem Zusammenbau nicht zwangsweise in einer einen sicheren Masseschluß gewährleistenden Weise aneinander anliegen. Dazu kommt, daß die Gehäuseteile häufig lackiert sind, so daß ohnehin kein elektrischer Kontakt zwischen aneinander angrenzenden Gehäuseteilen möglich ist. Enthalten ferner die elektrischen oder elektronischen Geräte mechanisch bewegte Teile, so stören die dadurch hervorgerufenen Vibrationen der Gehäuseteile die mögliche elektrische Kontaktgabe. Diese vorstehend geschilderten Probleme zwingen dazu, Massebolzen und Massebuchsen in die aneinandergrenzenden Gehäuseteile einzusetzen, um eine sichere Kontaktgabe zu gewährleisten. Der finanzielle Aufwand für diese Massebolzen und Massebuchsen sowie ihre Montage ist relativ hoch.

Der Erfindung liegt die Aufgabe zugrunde, eine Kontaktanordnung der eingangs genannten Art anzugeben, die bei geringem Material- und Herstellungsaufwand eine zuverlässige Kontaktgabe zwischen aneinandergrenzenden Gehäuseteilen gewährleistet.

Diese Aufgabe wird neuerungsgemäß dadurch gelöst, daß eine der Kontaktflächen an einem mit einem der Gehäuseteile verbundenen Federelement ausgebildet ist und daß mindestens eine der Kontaktflächen als Rauhfläche ausgebildet ist. Das Federelement sorgt dafür, daß die Kontaktflächen auch bei beispielsweise einem Spalt zwischen den beiden Gehäuseteilen stets aneinander anliegen. Die Rauhfläche bewirkt, daß auch bei einer Oxidation oder sogar einer Lackierung der Kontaktflächen stets das Metall der Kontaktflächen freigekratzt und dadurch ein sicherer elektrischer Kontakt hergestellt wird.

Geriefte Kontaktflächen in Form von Rauhflächen sind bei einer Klemmanordnung zur elektrischen Verbindung zweier Leiter aus der FR-A-2 472 854 bekannt.

Bei nicht lackierten Oberflächen der Gehäuseteile, zum Beispiel galvanisch vergüteten Oberflächen genügt es, die Rauhfläche direkt in einem der Gehäuseteile auszubilden, beispielsweise einzuprägen. Soll dagegen das Gehäuseteil lackiert werden, ist es zweckmäßig, wenn die Rauhfläche an einem mit einem der Gehäuseteile verbindbaren Kontaktelement ausgebildet ist. Ein solches Kontaktelement kann beispielsweise von einer Schraube gebildet sein, deren Kopffläche als Rauhfläche ausgebildet ist. Wird die vorzugsweise selbstschneidend ausgebildete Kontaktschraube nach dem Lackieren des betreffenden Gehäuseteils in dieses eingeschraubt, so ist mit Sicherheit ein guter elektrischer Kontakt zwischen der Kontaktschraube und dem Gehäuseteil gewährleistet.

Vorzugsweise wird zumindest das Federelement vor dem Lackieren des betreffenden Gehäuseteiles mit diesem verschweißt, vernietet oder verschraubt. Um das zeitraubende Abkleben der Kontaktflächen oder das spätere Freikratzen der Kontaktflächen zu vermeiden, ist es zweckmäßig, wenn die Kontaktflächen mit einer abziehbaren Schutzfolie bedeckt sind. An den fertig lackierten Gehäuseteilen braucht beim Zusammenbau dann nur noch die Schutzfolie von den Kontaktflächen abgezogen zu werden, um die Kontaktgabe zwischen den Kontaktflächen zu ermöglichen. Vorzugsweise wird diese Schutzfolie bereits vor dem Ausstanzen der zur Herstellung der Federelemente bestimmten Federstahlstreifen auf das Federstahlblech aufgeklebt, wie dies im folgenden noch erläutert wird.

Weitere Merkmale und Vorteile der Neuerung ergeben sich aus der folgenden Beschreibung, welche in Verbindung mit den beigefügten Zeichnungen die Neuerung anhand von Ausführungsbeispielen erläutert. Es zeigen:

Fig. 1 einen Schnitt durch zwei einander benachbarte Wandabschnitte zweier Gehäuseteile mit einer ersten Ausführungsform der neuerungsgemäßen Kontaktanordnung,

Fig. 2 eine Draufsicht auf die als Rauhfläche ausgebildete Kontaktfläche bei der Ausführungsform gemäß Fig. 1,

Fig. 3 eine der Fig. 1 entsprechende Ansicht mit einer zweiten Ausführungsform der neuerungsgemäßen Kontaktanordnung,

Fig. 4 eine Draufsicht auf das in der Fig. 3 dargestellte, die Rauhfläche aufweisende Kontaktelement und

Fig. 5 eine Draufsicht auf einen Abschnitt eines Federstahlbleches, aus dem die Federelemente ausgestanzt werden.

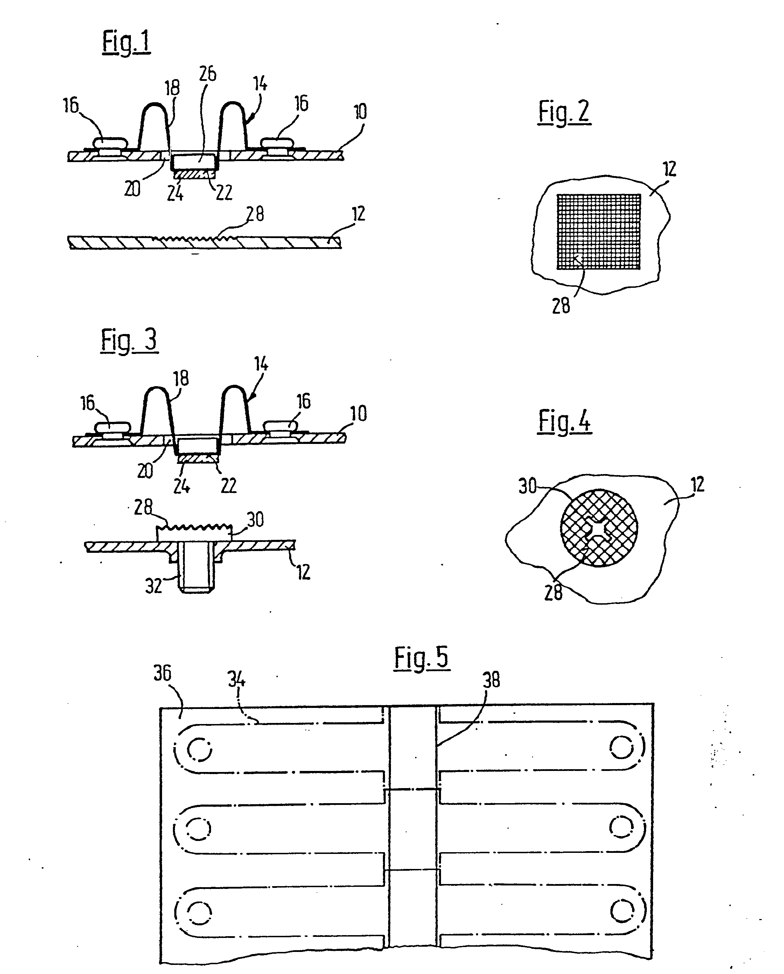

In der Fig. 1 erkennt man jeweils einen Wandabschnitt 10 bzw. 12 zweier im übrigen nicht dargestellter Gehäuseteile eines elektrischen oder elektronischen Gerätes, die im zusammengebauten Zustand unmittelbar aneinandergrenzen. Zwischen den Wandabschnitten 10 und 12 soll zur Herstellung eines Masseschlusses zwischen den Gehäuseteilen ein guter elektrischer Kontakt sichergestellt werden. Hierzu ist an dem Wandabschnitt 10 eine annähernd M-förmig gebogene Kontaktfeder 14 mit Hilfe von Nieten 16 befestigt, die mit ihrem Mittelabschnitt 18 durch eine Durchbrechung 20 in dem Wandabschnitt 10 in Richtung auf den gegenüberliegenden Wandabschnitt 12 des anderen Gehäuseteiles hindurchragt. Der Mittelabschnitt 18 ist verbreitert und weist eine parallel zur Oberfläche des Wandabschnittes 10 gerichtete erste Kontaktfläche 22 auf, die mit einer gestrichelt angedeuteten Schutzfolie 24 bedeckt ist. Um die Stabilität der Kontaktfeder 14 im Bereich der Kontaktfläche 22 zu erhöhen, sind zwei parallel zur Zeichenebene gerichtete Randabschnitte 26 von der Kontaktfläche 22 nach rückwärts, das heißt von dem gegenüberliegenden Wandabschnitt 12 weg umgebogen.

Bei der Ausführungsform gemäß den Fig. 1 und 2 ist angenommen, daß zumindest die Wandabschnitte 10 und 12 der Gehäuseteile nicht lackiert sondern beipslsweise nur galvanisch vergütet sind. In diesem Fall genügt es, die zum Zusammenwirken mit der Kontaktfläche 22 an der Kontaktfeder 14 bestimmte Gegenkontaktfläche 28 in Form einer in den Wandabschnitt 12 eingeprägten Rauhfläche auszubilden, wie man dies aus den Fig. 1 und 2 erkennt. Bei dieser Ausführungsform bräuchte die Kontaktfläche 22 nicht von der Schutzfolie 24 bedeckt zu sein, da der Lackiervorgang entfällt. Beim Zusammenbau der Gehäuseteile kommen die beiden Wandabschnitte 10 und 12 aneinander zu liegen, wobei die Kontaktfläche 22 federnd an der Rauhfläche 28 anliegt. Bei leichten Vibrationen der Gehäuseteile gegeneinander kratzt die Rauhfläche 28 ständig auf der Kontaktfläche 22 wodurch ein guter elektrischer Kontakt zwischen der Rauhfläche 28 und dem Federelement und damit auch den beiden Wandabschnitten 10 und 12 der Gehäuseteile sichergestellt ist.

Sind die Gehäuseteile lackiert, so ist es vorzuziehen, die die Gegenkontaktfläche 28 bildende Rauhfläche an dem Kopf 30 einer mit einem selbstschneidenden Gewinde versehenen Kontaktschraube 32 auszubilden, die in den Wandabschnitt 12 nach dem Lackieren des zugehörigen Gehäuseteiles eingeschraubt wird.

Um bei der Ausführungsform der Kontaktanordnung gemäß Fig. 3 die Kontaktfeder 14 vor dem Lackieren des zugehörigen Gehäuseteiles an dem Wandabschnitt 10 befestigen zu können, ohne daß die Kontaktfläche 22 bei dem anschließenden Lackiervorgang mitlackiert wird, ist die Kontaktfläche 22 vorzugsweise mit der Schutzfolie 24 bedeckt, die erst unmittelbar vor dem Zusammenbau der Gehäuseteile abgezogen wird. Dadurch ist wieder sichergestellt, daß ohne großen Aufwand zwei blanke Kontaktflächen aufeinandertreffen.

Das Abdecken der Kontaktflächen 22 der Kontaktfedern 14 läßt sich auf einfache Weise dadurch erreichen, daß die Schutzfolie 24 bereits vor dem Ausstanzen der Kontaktfederrohlinge 34 auf das zu deren Herstellung dienende Federstahlblech 36 aufgeklebt wird (Fig. 5). Hierzu wird ein Folienstreifen 38 über den Bereich geklebt, der nach dem Ausstanzen der Rohlinge 34 die Kontaktfläche 22 und die Randstreifen 26 jeder Kontaktfeder bildet. Damit entfällt das Abdecken der Kontaktflächen vor dem Lackiervorgang bzw. das Abkratzen der Kontaktflächen nach dem Lackiervorgang.

Es versteht sich, daß die Rauhfläche auch an der Kontaktfeder ausgebildet sein könnte und daß die Gegenkontaktfläche an dem jeweils anderen Gehäuseteil oder an der Kontaktschraube von einer Schutzfolie bedeckt sein könnte.

### Patentansprüche

1. Kontaktanordnung zur Herstellung eines elektrischen Kontaktes zwischen zwei aneinander grenzenden Gehäuseteilen (10, 12) von elektrischen oder elektronischen Geräten, wobei an jedem der Gehäuseteile (10, 12) eine von zwei zur elektrischen Kontaktgabe miteinander zusammenwirkenden Kontaktflächen (22, 28) vorgesehen ist, dadurch <u>gekennzeichnet</u>, daß eine der Kontaktflächen (22, 28) an einem mit einem der Gehäuseteile (10, 12) verbundenen Federelement (14) ausgebildet ist und daß mindestens eine der Kontaktflächen (22, 28) als Rauhfläche ausgebildet ist.

2. Kontaktanordnung nach Anspruch 1, dadurch <u>gekennzeichnet</u>, daß die Rauhfläche (28) unmittelbar an einem der Gehäuseteile (10, 12) ausgebildet ist.

3. Kontaktanordnung nach Anspruch 1, <u>dadurch gekennzeichnet</u>, daß die Rauhfläche (28) an einem mit einem der Gehäuseteile (10, 12) verbindbaren Kontaktelement (32) ausgebildet ist.

4. Kontaktanordnung nach Anspruch 3, <u>dadurch gekennzeichnet</u>, daß das Kontaktelement von einer Kontaktschraube (32) gebildet ist, deren Kopffläche als Rauhfläche (28) ausgebildet ist.

5. Kontaktanordnung nach einem der Ansprüche 1 bis 4, <u>dadurch gekennzeichnet</u>, daß mindestens eine der Kontaktflächen (22, 28) mit einer abziehbaren Schutzfolie (24) bedeckt ist.

### Claims

1. A contact arrangement for producing an electrical contact between two adjoining housing parts (10, 12) of electrical or electronic appliances, each of said housing parts (10, 12) being provided with one of two contact surfaces (22, 28) which cooperate for making contact, <u>characterized</u> in that one of said contact surfaces (22, 28) is formed on a spring element (14) which is connected with one of said housing parts (10, 12), and that at least one of said contact surfaces (22, 28) is formed as a rough surface.

2. A contact arrangement as set forth in claim 1, <u>characterized</u> in that said rough surface (28) is directly formed on one of said housing parts (10, 12).

3. A contact arrangement as set forth in claim 1, <u>characterized</u> in that said rough surface (28) is formed on a contact element (32) connectable to one of said housing parts (10, 12).

4. A contact arrangement as set forth in claim 3, characterized in that said contact element is formed by a contact screw (32) the head surface of which is formed as a rough surface.

5. A contact arrangement as set forth in any of claims 1 to 4, characterized in that at least one of said contact surfaces (22, 28) is covered by a removable protective foil.

## Revendications

1. Agencement de contact pour établir un contact électrique entre deux parties de carter (10, 12) adjacentes d'appareils électriques ou électroniques, l'une des deux surfaces de contact (22, 28) coopérant pour établir le contact électrique étant prévue sur chacune des parties de carter (10, 12), caractérisée en ce qu'une des surfaces de contact (22, 28) est réalisée sur un élément à ressort (14) relié à une des parties de carter (10, 12), et au moins une des surfaces de contact (22, 28) est réalisée sous forme de surface rugueuse.

2. Agencement de contact selon la revendication l'caractérisé en ce que la surface rugueuse (28) est formée directement sur une des parties de carter (10, 12).

3. Agencement de contact selon la revendication 1, caractérisé en ce que la surface rugueuse (28) est formée sur un élément de contact (32) qui peut être relié à l'une des parties de carter (10, 12).

4. Agencement de contact selon la revendicaton 3, caractérisé en ce que l'élément de contact est formé par une vis de contact (32) dont la surface de tête est réalisée sous forme de surface rugueuse (28).

5. Agencement de contact selon l'une des revendications 1 à 4, caractérisé en ce qu'au moins une des surfaces de contact (22, 28) est recouverte par une feuille de protection (24)qu'on peut enlever.

## Fig. 1

## Fig. 2

## Fig. 3

## Fig. 4

## Fig. 5